# EUROPÄISCHE PATENTSCHRIFT

(11) **EP 1 832 896 B1**
(45) Veröffentlichungstag und Bekanntmachung des Hinweises auf die Patenterteilung: **11.06.2008**
(21) Anmeldenummer: 07004806.1
(22) Anmeldetag: 08.03.2007
(51) Int. Cl.: G01S 17/02, G01V 8/22

(54) **Reflexionslichtschranke mit Zusatzstrahlungsquelle zum Nachweis von Objekten in einem Überwachungsbereich**
Reflection light barrier with auxiliary radiation source for detecting objects in a surveillance area
Barrière lumineuse à réflexion avec source de radiation auxiliaire destinée à la vérification d'objets dans une zone de surveillance

(30) Priorität: 10.03.2006 DE 102006011250
(43) Veröffentlichungstag der Anmeldung: 12.09.2007
(73) Patentinhaber: Pepperl + Fuchs GmbH, 68307 Mannheim (DE)
(72) Erfinder: Filler, Thomas, 12623 Berlin (DE); Filler, Hanna Sophie, 12623 Berlin (DE); Filler, Clara Marie, 12623 Berlin (DE)
(74) Vertreter: Schiffer, Axel Martin

(56) Entgegenhaltungen:
- DE-A1- 2 824 583
- DE-A1- 10 029 865
- DE-C1- 4 221 726

## Beschreibung

Die Erfindung betrifft in einem ersten Aspekt eine Reflexionslichtschranke zum Nachweis von Objekten in einem Überwachungsbereich nach dem Oberbegriff des Anspruchs 1. In einem weiteren Aspekt bezieht sich die Erfindung auf ein Verfahren zum Betrieb einer Reflexionslichtschranke zum Nachweis von Objekten in einem Überwachungsbereich nach dem Oberbegriff des Anspruchs 14.

Eine gattungsgemäße Reflexionslichtschranke ist in DE 100 29 865 A1 beschrieben und weist eine Hauptstrahlungsquelle zum Aussenden von Teststrahlung, eine Hauptsendeoptik zum Leiten der Teststrahlung entlang einem Hauptstrahlengang in dem Überwachungsbereich, mindestens einen Reflektor zum Begrenzen des Überwachungsbereichs und zum Reflektieren der Teststrahlung, einen Hauptdetektor zum Nachweis der Teststrahlung und eine Hauptdetektoroptik zum Leiten der vom Reflektor reflektierten Teststrahlung auf den Hauptdetektor auf.

Bei einem gattungsgemäßen Verfahren wird eine Teststrahlung entlang einem Hauptstrahlengang in den Überwachungsbereich geleitet und die Teststrahlung wird, sofern sich kein Objekt im Überwachungsbereich befindet, von einem Reflektor, der den Überwachungsbereich begrenzt, reflektiert und von einem Hauptdetektor nachgewiesen.

Solche Reflexionslichtschranken werden bei komplexen Maschinen, in der Prozessautomatisierung und allgemein in der industriellen Technik für eine Vielzahl von Anwendungen eingesetzt. Ganz allgemein besteht hierbei ein Bedürfnis, diese Reflexionslichtschranken auch bei geringem zur Verfügung stehendem Platz flexibel einsetzen zu können.

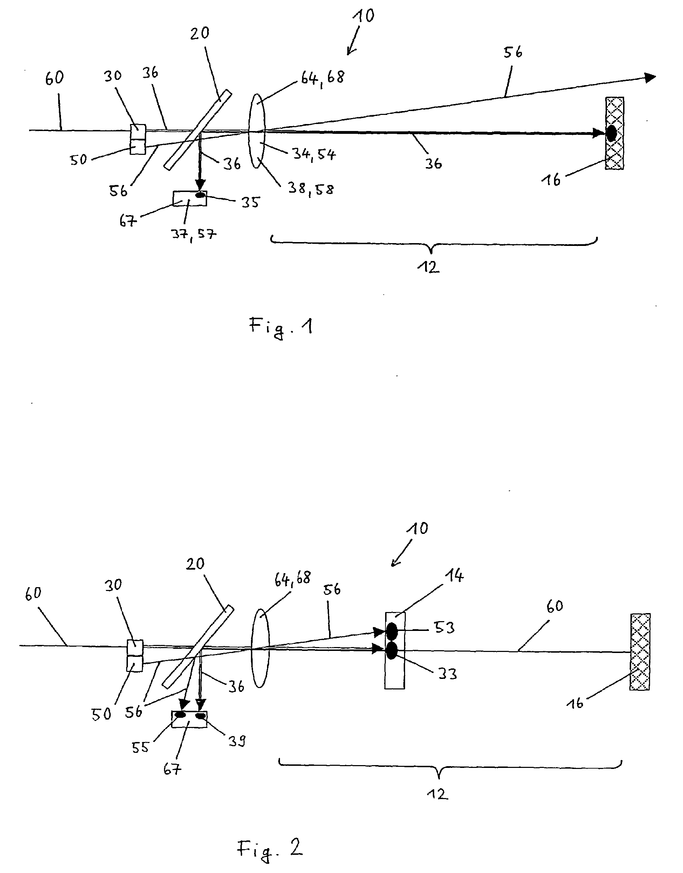

Die Wirkungsweise einer konventionellen Reflexionslichtschranke mit Autokollimation kann mit Bezug auf die Figuren 1 und 2 erläutert werden, welche darüber hinaus aber ein Ausführungsbeispiel der Erfindung beinhalten.

Bei konventionellen Reflexionslichtschranken wird die von einer Hauptstrahlungsquelle 30 abgestrahlte und einem Detektor 67 nachgewiesene Lichtleistung ausgewertet. Der Mittelpunkt der Hauptstrahlungsquelle 30 befindet sich dabei zweckmäßigerweise in der optischen Achse 60 einer Sendeoptik 64, wobei es sich im gezeigten Beispiel um eine einfache Linse handelt. Das Licht gelangt von der Hauptstrahlungsquelle 30 durch einen halbdurchlässigen Spiegel 20 und die Sendeoptik 64 zu einem Reflektor 16. Von diesem Reflektor 16 wird das Licht anschlie-ßend zur Sendeoptik 64 zurück und anschließend vom halbdurchlässigen Spiegel 20 in Richtung des Detektor 67 reflektiert. Bei Überschreiten eines Entscheidungsschwellwerts der auf den Detektor 67 auftreffenden Lichtleistung schaltet die Lichtschranke, da, wie in Fig. 1 dargestellt, der Lichtweg zwischen der Hauptstrahlungsquelle 30 und dem Reflektor 16 frei ist. Wenn sich aber, wie in Fig. 2 dargestellt, ein diffus reflektierendes Objekt 14 im Überwachungsbereich 12 zwischen Detektor 67 und Reflektor 16 befindet, trifft der Lichtstrahl nicht mehr den Reflektor 16. Während der Reflektor 16 das Licht gerichtet zurückreflektiert, streut ein diffus reflektierendes Objekt 14 das Licht breit und nur ein geringer Anteil des Lichts wird in Richtung des Detektors 67 reflektiert. Daraus folgt, dass die vom Detektor 67 nachgewiesene Lichtleistung, die in Fig. 2 durch die Ellipse 39 symbolisiert wird, kleiner ist als die durch die Ellipse 35 repräsentierte Lichtleistung, welche bei der in Fig. 1 gezeigten Situation gemessen wird, wenn das Licht vom Reflektor 16 reflektiert wird. Entsprechend wird der Entscheidungsschwellwert unterschritten und der Sensor, d.h. die Reflexionslichtschranke schaltet.

Von dem diffus reflektierenden Objekt 14 wird das Licht auch auf den Hauptstrahlengang 36 reflektiert. Der Detektor 67 ist dann mehr oder weniger homogen ausgeleuchtet. Allerdings wird ein mit der Entfernung des Objekts 14 wachsender Anteil der auf das Objekt 14 auftreffenden Strahlung auch in andere, nicht den Detektor treffende Richtungen reflektiert. Deshalb ist die in Fig. 2 nachgewiesene Intensität der direkt reflektierten Strahlung geringer, als wenn ein Reflektor, wie in Fig. 1, praktisch die gesamte Strahlung direkt auf dem Hauptstrahlengang 36 zum Detektor 67 reflektiert.

Eine solche konventionelle Reflexionslichtschranke mit Autokollimation hat den Nachteil, dass von einem stark reflektierenden oder streuenden, beispielsweise weißen Objekt 14, das sich sehr dicht vor der Sendeoptik 64 befindet, verhältnismäßig viel Lichtleistung zum Detektor 67 reflektiert wird. Der Entscheidungsschwellwert muss dann höher gewählt werden, damit unabhängig von der Position eines nachzuweisenden Objekts 14 im Überwachungsbereich 12 der Entscheidungsschwellwert sicher unterschritten wird. Außerdem ist aber zu berücksichtigen, dass die vom Reflektor 16 zurückgestrahlte Lichtleistung mit der Entfernung zwischen der Hauptstrahlungsquelle 30 und dem Reflektor 16 abnimmt. Dies ist einerseits auf ein nicht ideales, beispielsweise streuendes Rückstrahlungsverhalten des Reflektors 16 zurückzuführen. Andererseits wird bei Einsatz eines kleinen Reflektors 16 im Fernfeld nur ein mit der Entfernung abnehmender Teil des ausgesendeten Lichts reflektiert, da der Reflektor 16, der auch als Retroreflektor bezeichnet werden kann, überstrahlt wird.

Die maximal zulässige Entfernung, das heißt die Größe des Überwachungsbereichs 12 insgesamt, ist deshalb dadurch eingeschränkt, dass die Lichtleistung den Entscheidungsschwellwert überschreiten muss. Dieser muss so hoch liegen, dass durch reflektierte Strahlung von einem Objekt an einer beliebigen Position im Überwachungsbereich 12 die Einschaltschwelle sicher nicht überschritten wird. Andererseits muss das von dem Reflektor 16 zurückreflektierte Licht so intensiv sein, dass der Entscheidungsschwellwert zuverlässig überschritten wird.

Aus diesen Zwangsbedingungen ergibt sich also eine prinzipielle Beschränkung für die Größe des Überwachungsbereichs 12.

Optische Sensoren, bei denen auch Streulicht oder diffus reflektiertes Licht nachgewiesen wird, sind in EP 1 031 469 B1, DE 10 2005 019 909 A1 und EP 1 154 225 B1 beschrieben. In DE 10 2005 018 263 A1 ist eine Anordnung beschrieben, mit der Störungen durch Streulicht gerade vermieden werden sollen.

**Aufgabe** der Erfindung ist es, eine Reflexionslichtschranke zu schaffen, bei der der Überwachungsbereich flexibler gestaltet und insbesondere erheblich vergrößert werden kann. Außerdem soll ein Verfahren zum Betrieb einer Reflexionslichtschranke angegeben werden, welches die Überwachung eines flexibler zu wählenden Bereichs ermöglicht.

Diese Aufgabe wird in einem ersten Aspekt erfindungsgemäß durch die Reflexionslichtschranke mit den Merkmalen des Anspruchs 1 gelöst.

In einem zweiten Aspekt wird die Aufgabe erfindungsgemäß durch das Verfahren mit den Merkmalen des Anspruchs 14 gelöst.

Vorteilhafte Ausführungsbeispiele der erfindungsgemäßen Reflexionslichtschranke und bevorzugte Varianten und Weiterbildungen des erfindungsgemäßen Verfahrens sind Gegenstand der Unteransprüche.

Die Reflexionslichtschranke der oben angegebenen Art ist erfindungsgemäß dadurch weitergebildet, dass zum Erkennen eines stark streuenden Objekts im Überwachungsbereich eine Zusatzstrahlungsquelle zum Aussenden von Zusatzstrahlung vorhanden ist, dass eine Zusatzsendeoptik zum Leiten der Zusatzstrahlung entlang einem Zusatzstrahlengang vorhanden ist, dass der Zusatzstrahlengang gegenüber dem Hauptstrahlengang so geneigt ist, dass die Zusatzstrahlung auf ein im Überwachungsbereich eventuell befindliches Objekt treffen kann, dass der Zusatzstrahlengang gegenüber dem Hauptstrahlengang so geneigt ist, dass die Zusatzstrahlung nicht auf den Reflektor treffen kann, dass ein Zusatzdetektor zum Nachweis von von einem Objekt reflektierter und/oder gestreuter Zusatzstrahlung vorhanden ist, dass zum Leiten der von einem Objekt reflektierten und/oder gestreuten Zusatzstrahlung auf den Zusatzdetektor eine Zusatzdetektoroptik vorhanden ist und dass zum Erkennen eines stark streuenden Objekts im Überwachungsbereich Messinformationen des Hauptdetektors und des Zusatzdetektors auswertbar sind.

Das Verfahren der oben genannten Art ist erfindungsgemäß dadurch weitergebildet, dass zum Erkennen eines stark streuenden Objekts eine Zusatzstrahlung entlang einem Zusatzstrahlengang in den Überwachungsbereich so geleitet wird, dass die Zusatzstrahlung auf ein im Überwachungsbereich eventuell befindliches nachzuweisendes Objekt treffen kann, dass der Zusatzstrahlengang gegenüber dem Hauptstrahlengang so geneigt ist, dass die Zusatzstrahlung nicht auf den Reflektor treffen kann, dass Zusatzstrahlung, die von einem Objekt reflektiert oder gestreut wird, von einem Zusatzdetektor nachgewiesen wird und dass Messinformationen des Hauptdetektors und des Zusatzdetektors zum Nachweis, ob sich ein nachzuweisendes Objekt im Überwachungsbereich befindet, ausgewertet werden.

Als erster Kerngedanke der Erfindung kann angesehen werden, zusätzlich zu der von dem nachzuweisenden Objekt gestreuten und/oder reflektierten Strahlung beziehungsweise der vom Reflektor reflektierten Strahlung eine weitere Messinformation bereitzustellen, die einen Unterschied zwischen einem sehr dicht vor der Hauptstrahlungsquelle befindlichen Objekt und einem Reflektor im Fernfeld erkennen lässt.

Gemäß einem zweiten Kerngedanken der Erfindung wird diese zusätzliche Messinformation bereitgestellt durch eine Zusatzstrahlung, welche von einer Zusatzstrahlungsquelle entlang einem gegenüber dem Hauptstrahlengang geneigten Zusatzstrahlengang ausgesendet wird. Die Neigung des Zusatzstrahlengangs gegenüber dem Hauptstrahlengang ist dabei so gewählt, dass die Zusatzstrahlung jedenfalls auf ein eventuell im Überwachungsbereich befindliches Objekt treffen kann.

Als erster wesentlicher Vorteil der erfindungsgemäßen Reflexionslichtschranke und des erfindungsgemäßen Verfahrens zu deren Betrieb kann angesehen werden, dass durch Bereitstellen der zusätzlichen Messinformation in Form der nachgewiesenen Zusatzstrahlung, äußerst zuverlässig auch stark streuende Objekte, die sich dicht vor der Hauptstrahlungsquelle befinden, von dem Strahlungsmuster, welches von auch sehr weit entfernten Reflektoren generiert wird, unterschieden werden kann. In Praxis konnten hierdurch Vergrößerungen des Überwachungsbereichs bis zu einem Faktor 3 realisiert werden. Beispielsweise sind Reflexionslichtschranken mit einem Überwachungsbereich bis zu 10 m möglich.

Für die weitere Beschreibung der Funktion der Erfindung wird im Folgenden zunächst von der Annahme ausgegangen, dass sich der Reflektor in einer so hohen Entfernung zum Hauptdetektor befindet, dass die im Hauptdetektor gemessene Intensität aufgrund von Strahlung, die vom Reflektor reflektiert wurde, geringer ist, als die von einem im Überwachungsbereich vorhandenen Objekt gestreute oder reflektierte Strahlungsintensität. In diesem Fall würde die konventionelle Reflexionslichtschranke das Objekt nicht erkennen. Wenn nun von der erfindungsgemäß vorhandenen Zusatzstrahlungsquelle Zusatzstrahlung ausgesendet wird und sich kein Objekt im Überwachungsbereich befindet, würde der Zusatzdetektor keinerlei Zusatzstrahlung messen, wenn der Zusatzstrahlengang außerdem so gewählt ist, dass die Zusatzstrahlung nicht auf den Reflektor treffen kann. Befindet sich bei einer solchen Konfiguration jedoch ein Objekt vergleichsweise nahe bei der Hauptstrahlungsquelle, der Zusatzstrahlungsquelle sowie dem Haupt- und Zusatzdetektor, wird vom Zusatzdetektor eine Intensität der Zusatzstrahlung gemessen.

Durch folgende logische Verknüpfung kann dann erkannt werden, ob sich ein Objekt im Überwachungsbereich befindet. Nur wenn die von der Hauptstrahlungsquelle im Hauptdetektor hervorgerufene Strahlungsintensität einen bestimmten Grenzwert überschreitet und die von der Zusatzstrahlungsquelle auf dem Zusatzdetektor hervorgerufene Intensität den Grenzwert unterschreitet, befindet sich kein Objekt im Überwachungsbereich. In jedem anderen Fall nimmt die Reflexionslichtschranke den Zustand "Objekt erkannt" ein.

Grundsätzlich muss der Verlauf der Strahlengänge für die Teststrahlung und die Zusatzstrahlung in Abhängigkeit von der Größe der typischerweise nachzuweisenden Objekte gewählt und angepasst werden.

Bei der erfindungsgemäßen Reflexionslichtschranke ist der Zusatzstrahlengang gegenüber dem Hauptstrahlengang so geneigt, dass die Zusatzstrahlung nicht auf den Reflektor treffen kann. Bei einer solchen Anordnung kann folglich keinerlei Zusatzstrahlung vom Reflektor auf den Zusatzdetektor gelangen. Die Auswertung gestaltet sich deshalb bei einer solchen Variante insgesamt einfach, da prinzipiell davon ausgegangen werden kann, dass sich ein Objekt im Überwachungsbereich befindet, wenn Zusatzstrahlung vom Zusatzdetektor nachgewiesen wird. Voraussetzung hierfür ist, dass der Reflektor in einer geeigneten Lage positioniert ist.

Bei einer einfachen Anordnung der optischen Komponenten kann die erforderliche Neigung des Zusatzstrahlengangs dadurch erreicht werden, dass die Zusatzstrahlungsquelle bezüglich der Hauptstrahlungsquelle und dem Hauptstrahlengang seitlich versetzt angeordnet ist.

Bei einer bevorzugten Weiterbildung der Erfindung sind zusätzlich zur Zusatzstrahlungsquelle weitere Zusatzstrahlungsquellen zum Aussenden von weiterer Zusatzstrahlung vorhanden, wobei die von einem Objekt gestreute weitere Zusatzstrahlung detektierbar und zum Nachweis von stark streuenden Objekten auswertbar ist. Die Zuverlässigkeit des Nachweises von stark streuenden Objekten kann dann noch weiter erhöht werden.

Diese weiteren Zusatzstrahlungsquellen können beispielsweise auf der gegenüberliegenden Seite der Zusatzstrahlungsquelle, allgemein im Umkreis oder der unmittelbaren Umgebung der Hauptstrahlungsquelle angeordnet werden, damit der Sensor, also die Reflexionslichtschranke, nicht den Zustand "Objekt erkannt" einnimmt, wenn sich im Fernfeld kein Reflektor, aber im Nahfeld ein diffus reflektierendes Objekt in einer beliebigen Position befindet.

Die weiteren Zusatzstrahlungsquellen können ebenfalls seitlich neben der Hauptstrahlungsquelle angeordnet sein, wodurch jeweils wiederum ein gegenüber dem Hauptstrahlengang geneigter Strahlungsverlauf erreicht werden kann. Zweckmäßig kann auch hier der Strahlungsverlauf jeweils so gewählt werden, dass der Reflektor nicht mit der weiteren Zusatzstrahlung beaufschlagt werden kann.

In verfahrensmäßiger Hinsicht wird dabei weitere Zusatzstrahlung entlang von weiteren gegenüber dem Hauptstrahlengang geneigten Zusatzstrahlengängen in den Überwachungsbereich geleitet, von einem Objekt gestreute und/oder reflektierte weitere Zusatzstrahlung wird nachgewiesen und die weitere Zusatzstrahlung wird zum Nachweis, ob sich ein Objekt im Überwachungsbereich befindet, ausgewertet.

Die erhaltenen Informationen, also die nachgewiesene Teststrahlung, die nachgewiesene Zusatzstrahlung und/oder die nachgewiesene weitere Zusatzstrahlung kann außerdem in besonders vorteilhafter Weise zur Bestimmung einer Bewegungsrichtung des Objekts ausgewertet werden. Hierdurch ergeben sich für die erfindungsgemäße Reflexionslichtschranke im Vergleich zum Stand der Technik völlig neue Anwendungsmöglichkeiten.

Der Aufbau der Reflexionslichtschranke kann kompakter gestaltet werden, wenn die Hauptsendeoptik und die Zusatzsendeoptik ein und dieselbe Sendeoptik ist. Außerdem kann der Hauptdetektor und der Zusatzdetektor ein und derselbe Detektor sein und die Hauptdetektoroptik und die Zusatzdetektoroptik kann ein und dieselbe Detektoroptik sein. Je nach zur Verfügung stehendem Platz für den Einbau der Reflexionslichtschranke kann die eine oder andere Variante erwünscht und zweckmäßig sein.

Auch in verfahrensmäßiger Hinsicht ergeben sich Vorteile, wenn als Hauptdetektor und als Zusatzdetektor ein und derselbe Detektor verwendet wird. Der sehr geringe Aufwand, mit dem sich das Verfahren dann realisieren lässt, ist eine wesentliche Stärke der Erfindung.

Grundsätzlich gestattet eine Konfiguration mit einer separaten Sende- und Detektoroptik eine sehr flexible Anordnung der Reflexionslichtschranke. Sendeoptik und Empfangsoptik können zweckmäßig aus Kunststofflinsen, mithin aus kostengünstigen Komponenten, aufgebaut sein.

Für bestimmte Anwendungen kann aber auch eine Weiterbildung der Erfindung bevorzugt sein, bei der die Sendeoptik und die Detektoroptik ein und dieselbe Autokollimationsoptik ist und bei der zum Leiten der Teststrahlung und der Zusatzstrahlung auf den Detektor ein Strahlteiler vorhanden ist. Bei dieser Variante ist die Reflexionslichtschranke insgesamt aus sehr wenigen Komponenten aufgebaut. Hierbei wird außerdem der Vorteil erreicht, dass praktisch beliebig dicht vor der Autokollimationsoptik befindliche Objekte nachgewiesen werden können.

Als Haupt- und/oder Zusatzstrahlungsquellen kommen grundsätzlich die verschiedensten Strahlungsquellen in Betracht. Beispielsweise können Laser ebenso eingesetzt werden, wie Glühlampen mit entsprechender Optik. Bei besonders bevorzugten Varianten sind aber als Hauptstrahlungsquelle und/oder als Zusatzstrahlungsquelle LED's eingesetzt. Diese Komponenten sind energieeffektiv und außerdem kostengünstig.

Im Hinblick auf die Variante mit mehreren Zusatzstrahlungsquellen ist in diesem Zusammenhang außerdem besonders bevorzugt, wenn die Hauptstrahlungsquelle und die Zusatzstrahlungsquelle und/oder die weiteren Zusatzstrahlungsquellen gemeinsam als LED-Senderarray mit n=2, n=3, n=4 oder n=5 LED's ausgebildet sind. Hierdurch wird der Vorteil erreicht, dass nur ein einziges Bauelement eingesetzt werden muss. Die jeweiligen Senderabschnitte des Arrays können grundsätzlich jeweils dieselbe Größe aufweisen. Auch unterschiedliche Größen sind möglich und für bestimmte Anwendungen sinnvoll.

Hierzu können als Hauptstrahlungsquelle und als Zusatzstrahlungsquelle zwei LED-Chips in ein bedrahtetes Bauelement oder ein SMD-Bauelement eingebaut sein, oder zwei LED-Chips können on board bestückt sein.

Die Fehler- und/oder Störanfälligkeit der erfindungsgemäßen Reflexionslichtschranke kann weiter reduziert und die Nachweissicherheit auch für stark streuende Objekte damit erhöht werden, wenn als Hauptstrahlungsquelle und/oder als Zusatzstrahlungsquelle LED's, insbesondere sogenannte "point-source"-LED's, eingesetzt sind, bei denen sich an der optisch emittierenden Fläche keine Elektrode befindet. Ebenso können Leuchtdioden eingesetzt werden, bei denen der leuchtende Bereich durch die Elektrode umschlossen wird. Die Abstrahlcharakteristik der emittierten Strahlung weist bei solchen LED's nicht die bei konventionellen LED's vorhandenen "dips" auf, die von den frontseitig gebondeten Anschlussdrähten herrühren.

In bestimmten Anwendungssituationen können auch VCSELs und/oder RCLEDs als Strahlungsquelle vorteilhaft eingesetzt werden.

Unter den vorstehend beschriebenen Bedingungen würde ein sich vergleichsweise dicht vor dem Detektor befindender Reflektor, der Teststrahlung und Zusatzstrahlung reflektiert, ebenfalls als Objekt erkannt. Um dies auszuschließen, kann eine Variante zweckmäßig sein, bei der im Zusatzstrahlengang, insbesondere vor dem Zusatzdetektor, eine Blende vorgesehen ist, so dass zwar von einem nachzuweisenden Objekt im Überwachungsbereich diffus reflektierte oder gestreute Strahlung, nicht aber direkt von diesem nachzuweisenden Objekt im Überwachungsbereich reflektierte Zusatzstrahlung im Zusatzdetektor nachweisbar ist. Dies lässt sich insbesondere vorteilhaft realisieren, wenn als Hauptdetektor und Zusatzdetektor ein und derselbe Detektor verwendet wird.

Grundsätzlich kann die Teststrahlung und die Zusatzstrahlung dieselbe Wellenlänge aufweisen. Im Hinblick auf die Bedienfreundlichkeit der erfindungsgemäßen Reflexionslichtschranke kann es aber von Vorteil sein, wenn die Teststrahlung und die Zusatzstrahlung im Hinblick auf Intensität, Frequenz und/oder Zeitabhängigkeit unterschiedlich sind.

Da für den Infrarot-Bereich hochwertige optische Komponenten, insbesondere Detektoren, kostengünstig erhältlich sind, kann zweckmäßigerweise die Teststrahlung sichtbares Licht und die Zusatzstrahlung Infrarotlicht sein.

Um zu vermeiden, dass in irgendeiner Weise vom Reflektor gestreute und/oder reflektierte Zusatzstrahlung nachgewiesen wird, kann vor dem Reflektor im Hauptstrahlengang ein Filter für die Zusatzstrahlung angeordnet sein.

Bei einer solchen Variante mit einem wellenlängen-selektiven Filter vor dem Reflektor muss eine im Vergleich zur Teststrahlung spektral unterschiedliche Zusatzstrahlung verwendet werden.

Die Effektivität der Auswertung kann erhöht werden und der Aufbau der Reflexionslichtschranke gestaltet sich einfacher, wenn die Teststrahlung und die Zusatzstrahlung zeitlich versetzt zueinander ausgesandt und nachgewiesen werden. Der Nachweis von Teststrahlung und Zusatzstrahlung kann dann grundsätzlich mit nur einem Detektor erfolgen. Als zeitlich versetzt kann in diesem Zusammenhang jede unterschiedliche zeitliche Struktur der Teststrahlung und der Zusatzstrahlung angesehen werden.

Eine andere Möglichkeit zur sicheren Erkennung von Reflektoren in der Nähe des Detektors kann durch eine erweiterte Logik realisiert werden, bei der eine Auswertung der Messinformationen des Hauptdetektors und des Zusatzdetektors durch Vergleich der gemessenen Intensitätswerte nicht nur mit einem, sondern mit zwei Schwellwerten erfolgt. Diese Verfahrensvariante beinhaltet somit eine dreiwertige Logik.

Weitere Vorteile und Merkmale der Erfindung werden nachstehend unter Bezugnahme auf die beigefügten schematischen Zeichnungen beschrieben.

Hierin zeigt:
- Fig. 1: eine schematische Ansicht eines ersten Ausführungsbeispiels einer erfindungsgemäßen Reflexionslichtschranke;
- Fig. 2: das in Fig. 1 gezeigte Ausführungsbeispiel mit einem Objekt im Überwachungsbereich;
- Fig. 3: in einer schematischen Teilansicht ein zweites Ausführungsbeispiel einer erfindungsgemäßen Reflexionslichtschranke;
- Fig. 4: in einer schematischen Ansicht ein drittes Ausführungsbeispiel einer erfindungsgemäßen Reflexionslichtschranke;
- Fig. 5 und 6: in schematischen Ansichten Senderarrays für eine erfindungsgemäße Reflexionslichtschranke; und
- Fig. 7: eine Logiktabelle für eine Variante des erfindungsgemäßen Verfahrens.

Ein erstes einfaches Ausführungsbeispiel einer erfindungsgemä-ßen Reflexionslichtschranke 10 wird im Zusammenhang mit den Fig. 1 und 2 erläutert. Äquivalente Komponenten sind dort jeweils mit denselben Bezugszeichen versehen.

Die erfindungsgemäße Reflexionslichtschranke 10 weist als erste wesentliche Komponenten eine Hauptstrahlungsquelle 30, eine Zusatzstrahlungsquelle 50 und einen Reflektor 16 auf, der einen Überwachungsbereich 12 begrenzt. Die Hauptstrahlungsquelle 30 sendet Teststrahlung und die Zusatzstrahlungsquelle 50 sendet Zusatzstrahlung aus. Beispielsweise kann die Teststrahlung sichtbares Licht und die Zusatzstrahlung Infrarotlicht sein. Beim gezeigten Beispiel handelt es sich um eine Variante, bei der eine Hauptsendeoptik 34, eine Hauptdetektoroptik 38, eine Zusatzsendeoptik 54 und eine Zusatzdetektoroptik 58 von ein und derselben Sendeoptik 64 und Detektoroptik 68 gebildet wird. Diese Anordnung wird auch als Autokollimationsoptik bezeichnet. Im gezeigten Ausführungsbeispiel wird die Sendeoptik 64 und die Detektoroptik 68 durch eine einfache Linse gebildet. Zum Nachweis von Teststrahlung und Zusatzstrahlung ist ein Detektor 67 vorhanden, der gleichzeitig die Funktionalität eines Hauptdetektors 37 und eines Zusatzdetektors 57 bereitstellt. Zum Leiten der Teststrahlung und der Zusatzstrahlung auf den Detektor 67 ist weiterhin ein Strahlteiler 20 vorhanden. Die Zusatzstrahlungsquelle 50 ist seitlich versetzt zu der Hauptstrahlungsquelle 30 und einer optischen Achse 60 des Systems angeordnet.

Die Hauptstrahlungsquelle 30 emittiert die Teststrahlung entlang einem Hauptstrahlengang 36 der zunächst kollinear zu der optischen Achse 60 verläuft. Die Teststrahlung tritt also durch den Strahlteiler 20 und die Sendeoptik 64 hindurch und durchmisst im Anschluss den Überwachungsbereich 12. Sodann trifft die Teststrahlung, wenn - wie in der in Fig. 1 gezeigten Situation - sich im Überwachungsbereich 12 kein nachzuweisendes Objekt befindet, auf den Reflektor 16, der die Teststrahlung entlang der optischen Achse 60 zurückreflektiert. Die reflektierte Teststrahlung durchläuft wiederum die Sendeoptik 64, die nun aber als Detektoroptik 68 fungiert. Danach wird die Teststrahlung vom Strahlteiler 20 in Richtung des Detektors 67 abgelenkt, der eine durch eine Ellipse 35 repräsentierte Intensität der Teststrahlung nachweist.

Die Zusatzstrahlungsquelle 50 ist erfindungsgemäß so angeordnet, dass die Zusatzstrahlung entlang einem Zusatzstrahlengang 56 emittiert wird, der gegenüber dem Hauptstrahlengang 36 geneigt ist. Nach Durchtritt durch den Strahlteiler 20 durchläuft auch die Zusatzstrahlung die Sendeoptik 64 und pflanzt sich im Folgenden entlang dem gegenüber dem Hauptstrahlengang 36 geneigten Zusatzstrahlengang 56 fort. Aus den Fig. 1 und 2 ist unmittelbar ersichtlich, dass die optische Anordnung so gewählt ist, dass die Zusatzstrahlung zwar auf ein im Überwachungsbereich 12 befindliches nachzuweisendes Objekt 14, nicht aber auf den Reflektor 16 treffen kann.

Die Situation mit einem nachzuweisenden Objekt 14 im Überwachungsbereich 12 ist in Fig. 2 dargestellt. Zunächst ist dort ersichtlich, dass die Teststrahlung nicht mehr auf den Reflektor 16 trifft, sondern vielmehr von dem Objekt 14 abgefangen wird. Die auf dem Objekt 14 auftreffende Teststrahlung wird in Fig. 2 durch eine Ellipse 33 repräsentiert.

Außerdem trifft gemäß der erfindungsgemäßen Anordnung und dem erfindungsgemäßen Verfahren auch Zusatzstrahlung auf das Objekt 14, was durch eine Ellipse 53 veranschaulicht ist. Die vom Objekt 14 zurückreflektierte und/oder zurückgestreute Teststrahlung und Zusatzstrahlung gelangt auf den bereits beschriebenen Strahlengängen durch die Detektoroptik 68 und durch Reflexion am Strahlteiler 20 auf den gleichzeitig als Hauptdetektor 37 und Zusatzdetektor 57 wirkenden Detektor 67. Die dort jeweils auftretenden und gemessenen Strahlungsintensitäten sind in der Fig. 2 durch Ellipsen 39, 55 veranschaulicht.

Ob sich ein Objekt 14 im Überwachungsbereich 12 befindet, kann durch die folgende logische Verknüpfung erkannt werden. Nur wenn die von der Hauptstrahlungsquelle 30 im Detektor 67 hervorgerufene Lichtleistung einen zu wählenden Grenzwert überschreitet und das von der Zusatzstrahlungsquelle 50 im Detektor 67 generierte Signal den Grenzwert unterschreitet, befindet sich kein Objekt im Strahlengang. In jedem anderen Fall nimmt der Sensor, also die Reflexionslichtschranke 10, den Zustand "Objekt erkannt" ein.

Bei dieser Variante, bei der nur ein Detektor 67 verwendet wird, muss der Teststrahlung und der Zusatzstrahlung in irgendeiner Weise eine jeweils unterschiedliche zeitliche Struktur aufgeprägt werden, die vom Detektor 67 aufgelöst werden kann. Im einfachsten Fall werden Teststrahlung und Zusatzstrahlung zeitlich nacheinander von der Hauptstrahlungsquelle 30 beziehungsweise der Zusatzstrahlungsquelle 50 ausgesandt. Beispielsweise wird die Zusatzstrahlungsquelle 50 zeitlich versetzt zur Hauptstrahlungsquelle 30 gepulst. Die Hauptstrahlungsquelle 30 ist jeweils ausgeschaltet, wenn die Zusatzstrahlungsquelle 50 eingeschaltet ist und umgekehrt. Grundsätzlich können aber auch ein Hauptdetektor und ein separater Zusatzdetektor verwendet werden, da die entsprechenden Strahlengänge für die Teststrahlung und die Zusatzstrahlung räumlich gut getrennt sind.

Da nun aufgrund der nachgewiesenen Zusatzstrahlung zuverlässig festgestellt werden kann, ob sich ein Objekt 14 im Überwachungsbereich 12 befindet, kann ein Entscheidungsschwellwert für die Teststrahlung erheblich niedriger gewählt werden, als bei konventionellen Reflexionslichtschranken nach dem Stand der Technik ohne Zusatzstrahlung. Dies ermöglicht einen deutlich vergrößerten Abstand zwischen Hauptstrahlungsquelle 30 und Reflektor 16 und somit einen erheblich vergrößerten Überwachungsbereich 12. Hieraus ergeben sich in der Praxis eine Vielzahl neuer Anwendungsmöglichkeiten.

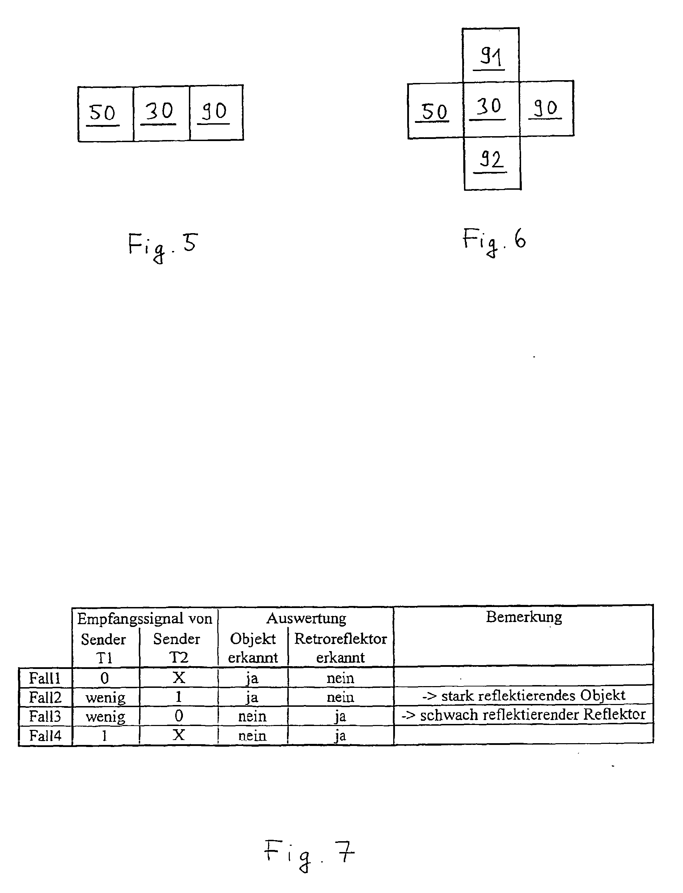

Prinzipiell können statt nur einer Zusatzstrahlungsquelle 50 noch weitere Zusatzstrahlungsquellen 90, 91, 92 vorhanden sein. Wie die Hauptstrahlungsquelle 30, die Zusatzstrahlungsquelle 50 und die weiteren Zusatzstrahlungsquellen 90, 91, 92 angeordnet sein können, ist beispielhaft und schematisch in den Fig. 5 und 6 dargestellt.

Beispielsweise können LED's in der in den Fig. 5 und 6 gezeigten Weise als Array angeordnet sein. Mit einer solchen Konfiguration kann prinzipiell auch eine Auswertung im Hinblick auf eine Bewegungsrichtung eines nachzuweisenden Objekts 14 im Überwachungsbereich 12 vorgenommen werden. Hierdurch ergeben sich weitere neue Anwendungsmöglichkeiten für die erfindungsgemäße Reflexionslichtschranke 10.

Unter den im Zusammenhang mit den Fig. 1 und 2 beschriebenen Bedingungen würde sich ein sehr nahe vor der Sendeoptik 64 befindender Reflektor, beispielsweise an der Stelle des Objekts 14 in Fig. 2, ebenfalls als Objekt erkannt. Damit ein solcher Reflektor im Überwachungsbereich 12 von einem Objekt unterschieden werden kann, kann es zweckmäßig sein, eine geeignete Blende vor dem Detektor 67 anzuordnen.

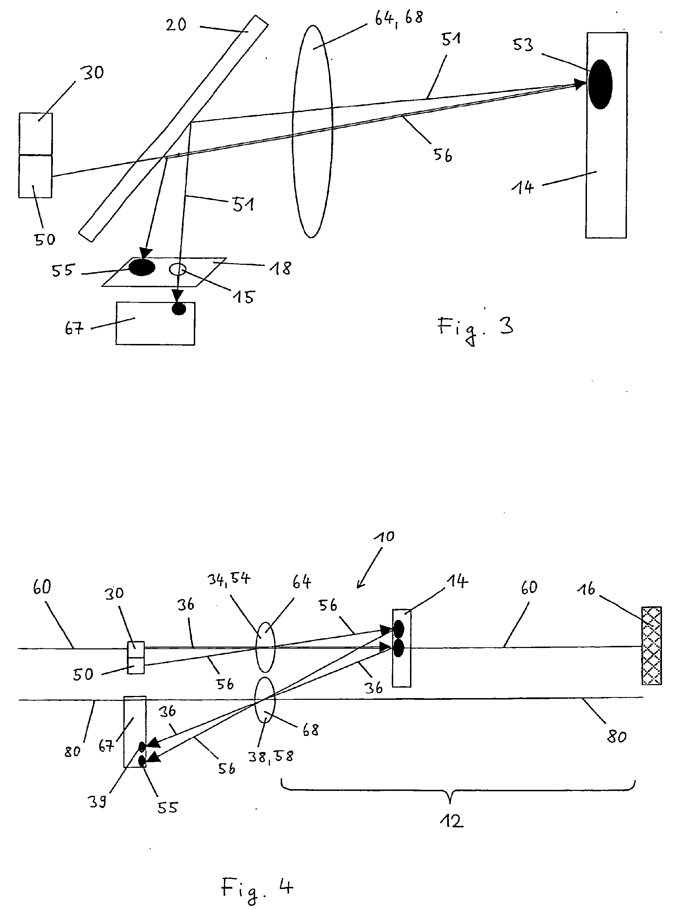

Diese Variante ist in Fig. 3 dargestellt. Die entsprechenden Komponenten sind dort wiederum mit denselben Bezugszeichen wie in den Fig. 1 und 2 versehen. Im Unterschied zu den Fig. 1 und 2 ist in Fig. 3 nur der Verlauf der Zusatzstrahlung dargestellt. Um zu vermeiden, dass direkt von einem äußerst stark streuenden oder reflektierenden Objekt 14 zurückgestrahlte Zusatzstrahlung auf den Detektor 67 gelangt, ist dort vor dem Detektor 67 eine Blende 18 mit einer Durchtrittsöffnung 15 angeordnet. Die Blende 18 mit der Öffnung 15 ist dabei so positioniert, dass durch die Öffnung 15 nur indirekt entlang einem Strahlengang 51 gestreutes Licht auf den Detektor 67 gelangen und nachgewiesen werden kann. Im Gegensatz dazu wird direkt zurückreflektiertes Licht von der Blende 18 zurückgehalten, was dort durch eine Ellipse 55 veranschaulicht ist.

Wenn die Öffnung 15 in der Blende 18 also klein ist, wird nur ein diffuser Anteil des von der Zusatzstrahlungsquelle 50 ausgesandten und von dem nicht direkt reflektierenden Objekt 14 reflektierten Lichtstrahls auf den Detektor 67 geleitet. Die Blende 18 absorbiert also insbesondere auch die durch einen sehr dicht vor der Sendeoptik 64 befindlichen Retroreflektor direkt reflektierte Strahlung. Von der Zusatzstrahlungsquelle 50 wird der auf dem Objekt 14 mit einer Ellipse 53 veranschaulichte Lichtfleck erzeugt. Der mit dem Bezugszeichen 56 gekennzeichnete Strahlengang zeigt die direkte Reflexion, die nicht auf den Detektor 67 trifft. Nur ein diffuser Anteil, der in Fig. 3 mit der Bezugsziffer 51 versehen ist, durchquert eine Öffnung 15 der Blende 18. Wenn ein Retroreflektor ausschließlich direkt reflektiert, entfällt dementsprechend der Strahlengang 51 und es wird kein Empfangssignal im Detektor 67 hervorgerufen.

Eine weitere Möglichkeit zur sicheren Erkennung von Retroreflektoren, die sich sehr dicht vor der Sendeoptik 64, also im Nahfeld, befinden, ist durch eine erweiterte Logik realisierbar. Wenn sich der Retroreflektor im Nahfeld befindet, ist die Intensität der reflektierten Teststrahlung sehr hoch. Bei sehr hohen Signalen wird aber die Intensität der Zusatzstrahlung definitionsgemäß nicht bewertet, sondern es wird sofort der Zustand "Objekt nicht erkannt" und "Retroreflektor erkannt" angenommen. Nur bei einer kleinen aufgrund Teststrahlung im Detektor 67 hervorgerufenen Intensität wird auch die Intensität der Zusatzstrahlung ausgewertet. Das durch die Hauptstrahlungsquelle 30 im Detektor 67 generierte Empfangssignal hat dann also nicht zwei, sondern vielmehr drei Zustände, nämlich 0="nichts gesehen", wenig="mehr als nichts, aber weniger als Weißwert", 1="mehr als Weißwert". Der Begriff des Weißwerts bezeichnet hier das höchstmögliche von einem diffus reflektierenden Objekt ausgelöste Signal bei Bestrahlung mit einer Hauptstrahlungsquelle 30. Es können dann die in der in Fig. 7 gezeigten Tabelle dargestellten logischen Zustände ausgewertet und unterschieden werden.

Die Fälle 1 und 4 beschreiben dort die Funktion einer klassischen Reflexionslichtschranke. Die vorliegende Erfindung ermöglicht zusätzlich die Unterscheidung der Fälle 2 und 3, wenn also das von der Hauptstrahlungsquelle 30 im Detektor 67 generierte Signal kleiner oder gleich dem "Weißwert" ist.

Ein weiteres Ausführungsbeispiel ist schließlich in Fig. 4 dargestellt. Wiederum sind äquivalente Komponenten mit denselben Bezugszeichen wie in den bisherigen Figuren versehen. Es handelt sich hierbei um eine Variante mit separater Sendeoptik 64 und Detektoroptik 68. Die optische Achse 60 der Sendeoptik 64 fällt somit nicht mit einer optischen Achse 80 der Detektoroptik 68 zusammen. Bei dieser Variante kann dementsprechend auf einen Strahlteiler 20, mithin auf eine vergleichsweise teure Komponente, verzichtet werden. Außerdem ermöglicht die Trennung von Sendeoptik 64 und Detektoroptik 68 eine sehr flexible Anordnung der einzelnen Komponenten und damit somit sehr variable Anwendungsmöglichkeiten.

## Patentansprüche

1. Reflexionslichtschranke zum Nachweis von Objekten (14) in einem Überwachungsbereich (12)
mit einer Hauptstrahlungsquelle (30) zum Aussenden von Teststrahlung,
mit einer Hauptsendeoptik (34) zum Leiten der Teststrahlung entlang einem Hauptstrahlengang (36) in dem Überwachungsbereich (12),
mit mindestens einem Reflektor (16) zum Begrenzen des Überwachungsbereichs (12) und zum Reflektieren der Teststrahlung,
mit einem Hauptdetektor (37) zum Nachweis der Teststrahlung und
mit einer Hauptdetektoroptik (38) zum Leiten der vom Reflektor (16) reflektierten Teststrahlung auf den Hauptdetektor (37),
**dadurch gekennzeichnet ,**
**dass** zum Erkennen eines stark streuenden Objekts (14) im Überwachungsbereich (12) eine Zusatzstrahlungsquelle (50) zum Aussenden von Zusatzstrahlung vorhanden ist,
**dass** eine Zusatzsendeoptik (54) zum Leiten der Zusatzstrahlung entlang einem Zusatzstrahlengang (56) vorhanden ist,
**dass** der Zusatzstrahlengang (56) gegenüber dem Hauptstrahlengang (36) so geneigt ist, dass die Zusatzstrahlung auf ein im Überwachungsbereich (12) eventuell befindliches Objekt (14) treffen kann,
**dass** der Zusatzstrahlengang (56) gegenüber dem Hauptstrahlengang (36) so geneigt ist, dass die Zusatzstrahlung nicht auf den Reflektor (16) treffen kann,
**dass** ein Zusatzdetektor (57) zum Nachweis von von dem Objekt (14) reflektierter und/oder gestreuter Zusatzstrahlung vorhanden ist,
**dass** zum Leiten der von einem Objekt (14) reflektierten und/oder gestreuten Zusatzstrahlung auf den Zusatzdetektor (57) eine Zusatzdetektoroptik (58) vorhanden ist, und
**dass** zum Erkennen eines stark streuenden Objekts (14) im Überwachungsbereich (12) Messinformationen des Hauptdetektors (37) und des Zusatzdetektors (57) auswertbar sind.

2. Reflexionslichtschranke nach Anspruch 1,
**dadurch gekennzeichnet ,**
**dass** die Zusatzstrahlungsquelle (50) bezüglich der Hauptstrahlungsquelle (30) und dem Hauptstrahlengang (36) seitlich versetzt angeordnet ist.

3. Reflexionslichtschranke nach einem der Ansprüche 1 oder 2,
**dadurch gekennzeichnet ,**
**dass** im Zusatzstrahlengang (56), insbesondere vor dem Zusatzdetektor (57), eine Blende (18) vorgesehen ist, so dass zwar von einem nachzuweisenden Objekt (14) im Überwachungsbereich (12) diffus reflektierte oder gestreute Strahlung, nicht aber direkt von diesem nachzuweisenden Objekt (14) im Überwachungsbereich (12) reflektierte Zusatzstrahlung im Zusatzdetektor (57) nachweisbar ist.

4. Reflexionslichtschranke nach einem der Ansprüche 1 bis 3,
**dadurch gekennzeichnet ,**
**dass** zusätzlich zur Zusatzstrahlungsquelle (50) weitere Zusatzstrahlungsquellen (90, 91, 92) zum Aussenden von weiterer Zusatzstrahlung vorhanden sind, wobei die von einem Objekt (14) gestreute weitere Zusatzstrahlung detektierbar und zum Nachweis von stark streuenden Objekten (14) auswertbar ist.

5. Reflexionslichtschranke nach einem der Ansprüche 1 bis 4,
**dadurch gekennzeichnet ,**
**dass** als Hauptstrahlungsquelle (30) und/oder als Zusatzstrahlungsquelle (50) LED's eingesetzt sind.

6. Reflexionslichtschranke nach einem der Ansprüche 1 bis 5,
**dadurch gekennzeichnet ,**
**dass** die Hauptstrahlungsquelle (30) und die Zusatzstrahlungsquelle (50) und/oder die weiteren Zusatzstrahlungsquellen (90, 91, 92) gemeinsam als LED-Senderarray mit n=2, n=3, n=4 oder n=5 LED's ausgebildet sind.

7. Reflexionslichtschranke nach einem der Ansprüche 1 bis 6,
**dadurch gekennzeichnet ,**
**dass** als Hauptstrahlungsquelle (30) und als Zusatzstrahlungsquelle (50) zwei LED-Chips in ein bedrahtetes Bauelement oder ein SMD-Bauelement eingebaut sind oder zwei LED-Chips on board bestückt sind.

8. Reflexionslichtschranke nach einem der Ansprüche 1 bis 7,
**dadurch gekennzeichnet ,**
**dass** als Hauptstrahlungsquelle (30) und/oder als Zusatzstrahlungsquelle (50) LED's eingesetzt sind, bei denen sich an der optisch emittierenden Fläche keine Elektrode befindet.

9. Reflexionslichtschranke nach einem der Ansprüche 1 bis 8,
**dadurch gekennzeichnet ,**
**dass** die Teststrahlung und die Zusatzstrahlung im Hinblick auf Intensität, Frequenz und/oder Zeitabhängigkeit unterschiedlich sind, insbesondere dass die Teststrahlung sichtbares Licht und die Zusatzstrahlung Infrarotlicht ist.

10. Reflexionslichtschranke nach einem der Ansprüche 1 bis 9,
**dadurch gekennzeichnet ,**
**dass** vor dem Reflektor (16) im Hauptstrahlengang (36) ein Filter für die Zusatzstrahlung angeordnet ist.

11. Reflexionslichtschranke nach einem der Ansprüche 1 bis 10,
**dadurch gekennzeichnet ,**
**dass** die Hauptsendeoptik (34) und die Zusatzsendeoptik (54) ein und dieselbe Sendeoptik (64) ist.

12. Reflexionslichtschranke nach einem der Ansprüche 1 bis 11,
**dadurch gekennzeichnet ,**
**dass** der Hauptdetektor (37) und der Zusatzdetektor (57) ein und derselbe Detektor (67) ist und
**dass** die Hauptdetektoroptik (38) und die Zusatzdetektoroptik (58) ein und dieselbe Detektoroptik (68) ist.

13. Reflexionslichtschranke nach einem der Ansprüche 11 oder 12,
**dadurch gekennzeichnet ,**
**dass** die Sendeoptik (64) und die Detektoroptik (68) ein und dieselbe Autokollimationsoptik ist und
**dass** zum Leiten der Teststrahlung und der Zusatzstrahlung auf den Detektor (67) ein Strahlteiler (20) vorhanden ist.

14. Verfahren zum Betrieb einer Reflexionslichtschranke zum Nachweis von Objekten in einem Überwachungsbereich, insbesondere nach einem der Ansprüche 1 bis 13, bei dem
eine Teststrahlung entlang einem Hauptstrahlengang (36) in den Überwachungsbereich (12) geleitet wird,
bei dem, sofern sich kein Objekt (14) im Überwachungsbereich (12) befindet, die Teststrahlung von einem Reflektor (16), der den Überwachungsbereich (12) begrenzt, reflektiert, und von einem Hauptdetektor (37) nachgewiesen wird,
**dadurch gekennzeichnet ,**
**dass** zum Erkennen eines stark streuenden Objekts (14) eine Zusatzstrahlung entlang einem Zusatzstrahlengang (56) in den Überwachungsbereich (12) so geleitet wird, dass die Zusatzstrahlung auf ein im Überwachungsbereich (12) eventuell befindliches nachzuweisendes Objekt (14) treffen kann,
**dass** der Zusatzstrahlengang (56) gegenüber dem Hauptstrahlengang (36) so geneigt ist, dass die Zusatzstrahlung nicht auf den Reflektor (16) treffen kann,
**dass** Zusatzstrahlung, die von einem Objekt (14) reflektiert oder gestreut wird, von einem Zusatzdetektor (57) nachgewiesen wird und
**dass** Messinformationen des Hauptdetektors (37) und des Zusatzdetektors (57) zum Nachweis, ob sich ein Objekt (14) im Überwachungsbereich (12) befindet, ausgewertet werden.

15. Verfahren nach Anspruch 14,
**dadurch gekennzeichnet ,**
**dass** die Teststrahlung und die Zusatzstrahlung zeitlich versetzt zueinander ausgesandt und nachgewiesen werden.

16. Verfahren nach einem der Ansprüche 14 oder 15,
**dadurch gekennzeichnet ,**
**dass** weitere Zusatzstrahlung entlang von weiteren gegenüber dem Hauptstrahlengang (36) geneigten Zusatzstrahlengängen in den Überwachungsbereich (12) geleitet wird,
**dass** von einem Objekt (14) gestreute und/oder reflektierte weitere Zusatzstrahlung nachgewiesen wird und
**dass** die weitere Zusatzstrahlung zum Nachweis, ob sich ein Objekt (14) im Überwachungsbereich (12) befindet, ausgewertet wird.

17. Verfahren nach einem der Ansprüche 14 bis 16,
**dadurch gekennzeichnet ,**
**dass** die nachgewiesene Teststrahlung, die nachgewiesene Zusatzstrahlung und/oder nachgewiesene weitere Zusatzstrahlung zur Bestimmung einer Bewegungsrichtung des Objekts (14) ausgewertet werden.

18. Verfahren nach einem der Ansprüche 14 bis 17,
**dadurch gekennzeichnet ,**
**dass** eine Auswertung der Messinformationen des Hauptdetektors (37) und des Zusatzdetektors (57) durch Vergleich der gemessenen Intensitätswerte mit einem oder mit zwei Schwellwerten erfolgt.

19. Verfahren nach einem der Ansprüche 14 bis 18,
**dadurch gekennzeichnet ,**
**dass** als Hauptdetektor (37) und als Zusatzdetektor (57) ein und derselbe Detektor (67) verwendet wird.

## Claims

1. Reflection light barrier for detecting objects (14) in a surveillance area (12)
with a main radiation source (30) for emitting test radiation,
with a main emitting optics (34) for guiding the test radiation along a main optical path (36) in the surveillance area (12),
with at least one reflector (16) for bounding the surveillance area (12) and for reflecting the test radiation,
with a main detector (37) for detecting the test radiation and
with a main detector optics (38) for guiding the test radiation reflected by reflector (16) onto the main detector (37),
**characterized in that**
for detecting a strong scattering object (14) in the surveillance area (12) an auxiliary radiation source (50) for emitting auxiliary radiation is provided,
an auxiliary emitting optics (54) is provided for guiding auxiliary radiation along an auxiliary optical path (56),
the auxiliary optical path (56) is so inclined relative to the main optical path (36) that the auxiliary radiation can strike any object (14) which may be located in the surveillance area (12),
the auxiliary optical path (56) is so inclined relative to the main optical path (36) that the auxiliary radiation cannot strike the reflector (16),
an auxiliary detector (57) is provided for detecting auxiliary radiation reflected and/or scattered by the object (14),
for guiding the auxiliary radiation reflected and/or scattered by the object (14) onto the additional detector (57), an auxiliary detector optics (58) is provided and for detecting a strong scattering object (14) in the surveillance area (12) measurement informations of the main detector (37) and auxiliary detector (57) can be evaluated.

2. Reflection light barrier according to claim 1,
**characterized in that**
the auxiliary radiation source (50) is positioned laterally offset relative to the main radiation source (30) and main optical path (36).

3. Reflection light barrier according to one of the claims 1 or 2,
**characterized in that**
in the auxiliary optical path (56), particularly upstream of the auxiliary detector (57), a diaphragm (18) is provided, so that although it is possible to detect dif fusely reflected or scattered radiation from an object (14) to be detected in the surveillance area (12) can be detected, this does not apply to auxiliary radiation in auxiliary detector (57) directly reflected by said object (14) to be detected in the surveillance area (12).

4. Reflection light barrier according to one of the claims 1 to 3,
**characterized in that**
in addition to the auxiliary radiation source (50) there are further auxiliary radiation sources (90, 91, 92) for emitting further auxiliary radiation, the further auxiliary radiation scattered by an object (14) can be detected and evaluated for the recognition of strong scattering objects (14).

5. Reflection light barrier according to one of the claims 1 to 4,
**characterized in that**
LEDs are used as the main radiation source (30) and/or as the auxiliary radiation source (50).

6. Reflection light barrier according to one of the claims 1 to 5,
**characterized in that**
the main radiation source (30) and auxiliary radiation source (50) and/or the further auxiliary radiation sources (90, 91, 92) are constructed jointly as a LED emitter array with n=2, n=3, n=4 or n=5 LEDs.

7. Reflection light barrier according to one of the claims 1 to 6,
**characterized in that**
as the main radiation source (30) and auxiliary radiation source (50) two LED chips are installed in a wired component or a SMD component or two LED chips are on board-equipped.

8. Reflection light barrier according to one of the claims 1 to 7,
**characterized in that**
for the main radiation source (30) and/or auxiliary radiation source (50) use is made of LEDs, in which there is no electrode on the optically emitting surface.

9. Reflection light barrier according to one of the claims 1 to 8,
**characterized in that**
the test radiation and auxiliary radiation differ with regards to intensity, frequency and/or time dependence and in particular the test radiation is visible light and the auxiliary radiation infrared light.

10. Reflection light barrier according to one of the claims 1 to 9,
**characterized in that**
upstream of reflector (16) in main optical path (36) is provided a filter for the auxiliary radiation.

11. Reflection light barrier according to one of the claims 1 to 10,
**characterized in that**
the main emitting optics (34) and auxiliary emitting optics (54) are one and the same emitting optics (64).

12. Reflection light barrier according to one of the claims 1 to 11,
**characterized in that**
the main detector (37) and auxiliary detector (57) is one and the same detector (67) and that the main detector optics (38) and auxiliary detector optics (58) are one and the same detector optics (68).

13. Reflection light barrier according to either of the claims 11 or 12,
**characterized in that**
the emitting optics (64) and detector optics (68) are one and the same autocollimating optics and that for guiding the test radiation and auxiliary radiation on detector (67) a beam splitter (20) is provided.

14. Method for operating a reflection light barrier for detecting objects in a surveillance area, particularly according to one of the claims 1 to 13,
in which a test radiation is guided along a main optical path (36) in the surveillance area (12),
in which in the case where there is no object (14) in surveillance area (12), the test radiation is reflected by a reflector (16), which bounds the surveillance area (12), and is detected by a main detector (37),
**characterized in that**
for the recognition of a strong scattering object (14) an auxiliary radiation is so guided along an auxiliary optical path (56) in surveillance area (12) that the auxiliary radiation can strike any object (14) to be detected which may be located in surveillance area (12),
the auxiliary optical path (56) is so inclined relative to the main optical path (36) that the auxiliary radiation cannot strike the reflector (16),
auxiliary radiation which is reflected or scattered by an object (14) is detected by an additional detector (57) and
measurement informations of main detector (37) and auxiliary detector (57) are evaluated for establishing whether there is an object (14) in surveillance area (12).

15. Method according to claim 14,
**characterized in that**
the test radiation and auxiliary radiation are emitted and detected in mutually time-shifted manner.

16. Method according to one of the claims 14 or 15,
**characterized in that**
further auxiliary radiation is guided along further auxiliary optical paths in the surveillance area (12) inclined with respect to the main optical path (36), that further auxiliary radiation scattered and/or reflected by an object (14) is detected and that the further auxiliary radiation is evaluated for detecting whether an object (14) is in the surveillance area (12).

17. Method according to one of the claims 14 to 16,
**characterized in that**
the detected test radiation, detected auxiliary radiation and/or detected further auxiliary radiation are evaluated for establishing a movement direction of object (14).

18. Method according to one of the claims 14 to 17,
**characterized in that**
the measurement informations of main detector (37) and auxiliary detector (57) are evaluated by comparing the measured intensity values with one or two threshold values.

19. Method according to one of the claims 14 to 18,
**characterized in that**
one and the same detector (67) is used as the main detector (37) and auxiliary detector (57).

## Revendications

1. Cellule photoélectrique à réflexion pour détecter des objets (14) dans une zone de surveillance (12)
avec une source de rayonnement principale (30) destinée à émettre un rayonnement de test,
avec une optique émettrice principale (34) pour envoyer le rayonnement de test le long d'un trajet de rayon principal (36) dans la zone de surveillance (12),
avec au moins un réflecteur (16) pour limiter la zone de surveillance (12) et pour réfléchir le rayonnement de test,
avec un détecteur principal (37) pour détecter le rayonnement de test, et
avec une optique détectrice principale (38) pour envoyer le rayonnement de test réfléchi par le réflecteur (16) sur le détecteur principal (37),
***caractérisée***
***en ce que****,* pour détecter un objet (14) fortement diffusant dans la zone de surveillance (12), une source de rayonnement supplémentaire (50) est présente pour émettre un rayonnement supplémentaire,
***en ce qu***'une optique émettrice supplémentaire (54) est présente pour envoyer le rayonnement supplémentaire le long d'un trajet de rayon supplémentaire (56),
***en ce que*** le trajet de rayon supplémentaire (56) est incliné par rapport au trajet de rayon principal (36) de telle manière que le rayonnement supplémentaire peut arriver sur un objet (14) éventuellement situé dans la zone de surveillance (12),
***en ce que*** le trajet de rayon supplémentaire (56) est incliné par rapport au trajet de rayon principal (36) de telle manière que le rayonnement supplémentaire ne peut pas arriver sur le détecteur (16),
***en ce qu***'un détecteur supplémentaire (57) est présent pour détecter le rayonnement supplémentaire réfléchi et/ou diffusé par l'objet (14),
***en ce que**,* pour diriger le rayonnement supplémentaire réfléchi et/ou diffusé par un objet (14) vers le détecteur supplémentaire (57), une optique détectrice supplémentaire (58) est présente, et
***en ce que**,* pour détecter un objet (14) fortement diffusant dans la zone de surveillance (12), des informations de mesure du détecteur principal (37) et du détecteur supplémentaire (57) peuvent être exploitées.

2. Cellule photoélectrique à réflexion selon la revendication 1, ***caractérisée en ce que*** la source de rayonnement supplémentaire (50) est décalée latéralement par rapport à la source de rayonnement principale (30) et au trajet de rayon principal (36).

3. Cellule photoélectrique à réflexion selon l'une quelconque des revendications 1 ou *2, **caractérisée en ce que**,* sur le trajet de rayon supplémentaire (56), en particulier avant le détecteur supplémentaire (57), est placé un diaphragme (18) de telle sorte que le rayonnement réfléchi de manière diffuse ou diffusé par un objet (14) à détecter dans la zone de surveillance (12) peut être détecté dans le détecteur supplémentaire (57), mais pas le rayonnement supplémentaire réfléchi directement par cet objet (14) à détecter dans la zone de surveillance (12).

4. Cellule photoélectrique à réflexion selon l'une quelconque des revendications 1 à 3, ***caractérisée en ce qu'***en plus de la source de rayonnement supplémentaire (50), d'autres sources de rayonnement supplémentaire (90, 91, 92) sont prévues pour émettre un autre rayonnement supplémentaire, l'autre rayonnement supplémentaire diffusé par un objet (14) pouvant être détecté et exploité pour la détection d'objets (14) fortement diffusants.

5. Cellule photoélectrique à réflexion selon l'une quelconque des revendications 1 à 4, ***caractérisée en ce que*** l'on utilise des diodes électroluminescentes comme source de rayonnement principale (30) et/ou comme source de rayonnement supplémentaire (50).

6. Cellule photoélectrique à réflexion selon l'une quelconque des revendications 1 à 5, ***caractérisée en ce que*** la source de rayonnement principale (30) et la source de rayonnement supplémentaire (50) et/ou les autres sources de rayonnement supplémentaire (90, 91, 92) sont conformées en commun en réseau émetteur de diodes électroluminescentes avec n = 2, n = 3, n = 4 ou n = 5 diodes électroluminescentes.

7. Cellule photoélectrique à réflexion selon l'une quelconque des revendications 1 à 6, ***caractérisée en ce que**,* comme source de rayonnement principale (30) et comme source de rayonnement supplémentaire (50), deux puces à diodes électroluminescentes sont intégrées dans un composant câblé ou un composant SMD, ou deux puces à diodes électroluminescentes sont montées sur carte.

8. Cellule photoélectrique à réflexion selon l'une quelconque des revendications 1 à 7, ***caractérisée en ce que**,* comme source de rayonnement principale (30) et comme source de rayonnement supplémentaire (50), on utilise des diodes électroluminescentes sur lesquelles il n'y a pas d'électrode sur la surface émettrice optique.

9. Cellule photoélectrique à réflexion selon l'une quelconque des revendications 1 à 8, ***caractérisée en ce que*** le rayonnement de test et le rayonnement supplémentaire diffèrent par leurs intensités, leurs fréquences et/ou leurs dépendances temporelles, en particulier ***en ce que*** le rayonnement de test est une lumière visible et le rayonnement supplémentaire une lumière infrarouge.

10. Cellule photoélectrique à réflexion selon l'une quelconque des revendications 1 à 9, ***caractérisée en ce qu*'**avant le réflecteur (16), un filtre pour le rayonnement supplémentaire est placé sur le trajet de rayon principal (36).

11. Cellule photoélectrique à réflexion selon l'une quelconque des revendications 1 à *10, **caractérisée en ce que*** l'optique émettrice principale (34) et l'optique émettrice supplémentaire (54) sont une seule et même optique émettrice (64).

12. Cellule photoélectrique à réflexion selon l'une quelconque des revendications 1 à 11, ***caractérisée***
***en ce que*** le détecteur principal (37) et le détecteur supplémentaire (57) sont un seul et même détecteur (67), et
***en ce que*** l'optique détectrice principale (38) et l'optique détectrice supplémentaire (58) sont une seule et même optique détectrice (68).

13. Cellule photoélectrique à réflexion selon l'une quelconque des revendications 11 ou 12,
***caractérisée***
***en ce que*** l'optique émettrice (64) et l'optique détectrice (68) sont une seule et même optique autocollimatrice et
***en ce que**,* pour envoyer le rayonnement de test et le rayonnement supplémentaire sur le détecteur (67), il est prévu un diviseur de rayons (20).

14. Procédé de fonctionnement d'une cellule photoélectrique à réflexion pour détecter des objets dans une zone de surveillance, en particulier selon l'une quelconque des revendications 1 à 13, dans lequel
un rayonnement de test est envoyé dans la zone de surveillance (12) le long d'un trajet de rayon principal (36),
dans lequel, si aucun objet (14) ne se trouve dans la zone de surveillance (12), le rayonnement de test est réfléchi par un réflecteur (16) qui limite la zone de surveillance (12), et est détecté par un détecteur principal (37),
***caractérisé***
***en ce que****,* pour détecter un objet (14) fortement diffusant, un rayonnement supplémentaire est envoyé dans la zone de surveillance (12) le long d'un trajet de rayon supplémentaire (56) de telle manière que le rayonnement supplémentaire puisse arriver sur un objet (14) à détecter éventuellement situé dans la zone de surveillance (12),
***en ce que*** le trajet de rayon supplémentaire (56) est incliné par rapport au trajet de rayon principal (36) de telle manière que le rayonnement supplémentaire ne puisse pas arriver sur le détecteur (16),
***en ce que*** le rayonnement supplémentaire qui est réfléchi ou diffusé par un objet (14) est détecté par un détecteur supplémentaire (57), et
***en ce que*** des informations de mesure du détecteur principal (37) et du détecteur supplémentaire (57) sont exploitées pour déterminer si un objet (14) se trouve dans la zone de surveillance (12).

15. Procédé selon la revendication 14, ***caractérisé en ce que*** le rayonnement de test et le rayonnement supplémentaire sont émis et détectés avec un décalage mutuel dans le temps.

16. Procédé selon l'une quelconque des revendications 14 ou 15,
***caractérisé***
***en ce qu'****un* autre rayonnement supplémentaire est envoyé dans la zone de surveillance (12) le long d'autres trajets de rayon supplémentaires inclinés par rapport au trajet de rayon principal (36),
***en ce que*** l'autre rayonnement supplémentaire diffusé et/ou réfléchi par un objet (14) est détecté, et
***en ce que*** l'autre rayonnement supplémentaire est exploité pour déterminer si un objet (14) se trouve dans la zone de surveillance (12).

17. Procédé selon l'une quelconque des revendications 14 à 16, ***caractérisé en ce que*** le rayonnement de test détecté et/ou l'autre rayonnement supplémentaire détecté sont exploités pour déterminer une direction de déplacement de l'objet (14).

18. Procédé selon l'une quelconque des revendications 14 à 17, ***caractérisé en ce qu*'**une analyse des informations de mesure du détecteur principal (37) et du détecteur supplémentaire (57) est effectuée par comparaison des valeurs d'intensité mesurées avec une ou deux valeurs de seuil.

19. Procédé selon l'une quelconque des revendications 14 à 18, ***caractérisé en ce que*** l'on utilise comme détecteur principal (37) et comme détecteur supplémentaire (57) un seul et même détecteur (67).
